(19) Europäisches Patentamt / European Patent Office / Office européen des brevets

(11) **EP 4 751 372 B1**

(12) **EUROPÄISCHE PATENTSCHRIFT**

(45) Veröffentlichungstag und Bekanntmachung des Hinweises auf die Patenterteilung:
**08.07.2026 Patentblatt 2026/28**

(21) Anmeldenummer: **24805524.6**

(22) Anmeldetag: **12.11.2024**

(51) Internationale Patentklassifikation (IPC):
**H02P 27/08** (2006.01) **H02M 7/5395** (2006.01)

(52) Gemeinsame Patentklassifikation (CPC):
**H02P 27/085; H02M 7/5395**

(86) Internationale Anmeldenummer:
**PCT/EP2024/082064**

(87) Internationale Veröffentlichungsnummer:
**WO 2025/104029 (22.05.2025 Gazette 2025/21)**

(54) **BETREIBEN VON SCHALTELEMENTEN EINES WECHSELRICHTERS**

OPERATION OF SWITCHING ELEMENTS OF AN INVERTER

FONCTIONNEMENT D'ÉLÉMENTS DE COMMUTATION D'UN ONDULEUR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **15.11.2023 DE 102023004626**

(43) Veröffentlichungstag der Anmeldung:
**03.06.2026 Patentblatt 2026/23**

(73) Patentinhaber: **Mercedes-Benz Group AG 70372 Stuttgart (DE)**

(72) Erfinder:
• **HEPP, Maximilian 70178 Stuttgart (DE)**
• **SAUR, Michael 72074 Tübingen (DE)**

(74) Vertreter: **Novagraaf Group Chemin de l'Echo 3 1213 Onex / Geneva (CH)**

(56) Entgegenhaltungen:
**CA-A1- 2 762 473**

• **SAUR MICHAEL ET AL: "Applying DBFC with Integrated Optimized Pulsed Pattern to Maximize Voltage Utilization with Low Distortion in Automotive Traction Drives", 2023 25TH EUROPEAN CONFERENCE ON POWER ELECTRONICS AND APPLICATIONS (EPE'23 ECCE EUROPE), EPE ASSOCIATION, 4 September 2023 (2023-09-04), pages 1 - 9, XP034437663, DOI: 10.23919/ EPE23ECCEEUROPE58414.2023.10264408**

**Beschreibung**

Die Erfindung betrifft ein Verfahren, eine Steuereinheit und ein Kraftfahrzeug gemäß den Oberbegriffen der unabhängigen Ansprüche.

Die Erfindung richtet sich insbesondere auf die Nutzung von mehrphasigen elektrischen Maschinen, wie zum Beispiel eine Synchronmaschine, einer Asynchronmaschine oder dergleichen, um eine Antriebsfunktionalität, insbesondere eine Antriebsfunktionalität für ein Kraftfahrzeug, realisieren zu können. Zu diesem Zweck ist die elektrische Maschine mit einem Wechselrichter elektrische verbunden, und zwar indem eine Ständerwicklung der elektrischen Maschine, die in der Regel als mehrphasige Ständerwicklung ausgebildet ist, an den Wechselrichter angeschlossen ist. Der Wechselrichter weist in der Regel für jede der Phasen der Ständerwicklung wenigstens eine Reihenschaltung aus den Schaltelementen auf, um die Ständerwicklung mit einem am Wechselrichter angeschlossenen Gleichspannungszwischenkreis elektrisch zu koppeln, in dem die Schaltelemente der Reihenschaltungen mit von jeweiligen Phasenspannungen der jeweiligen phasenabhängigen Schaltsignalen für die jeweiligen Schaltelemente beaufschlagt werden. Die Schaltsignale werden basierend auf einem Taktsignal unter Nutzung einer Pulsweitenmodulation ermittelt. Eine Taktperiode des Taktsignals ist kleiner als eine Schwingungsperiode einer Grundschwingung der jeweiligen Phasenspannungen. Zur Realisierung der Pulsweitenmodulation gibt es herkömmliche Steuerungsverfahren, wie zum Beispiel eine Space-Vektor-Pulsweitenmodulation (SVP), eine diskontinuierliche Pulsweitenmodulation oder dergleichen. Derartige Modulationsverfahren werden den sogenannten asynchronen Modulationsverfahren zugerechnet, die sich dadurch auszeichnen, dass sich eine Taktzahl wie folgt ergibt:

$$q = f\_sw/f\_el$$

Dabei ist die variable f_sw der Schaltfrequenz des Wechselrichters und die variable f_el der elektrischen Frequenz, die der Frequenz des Drehfelds entspricht, zugeordnet. Die Taktzahl q kann insbesondere eine gebrochen rationale Zahl sein.

Darüber hinaus sind sogenannte synchrone Modulationsverfahren verfügbar, die sich dadurch auszeichnen, dass die vorgenannte Taktzahl q immer durch eine natürliche Zahl gebildet ist. Derartige synchrone Modulationsverfahren werden auch als optimized-pulspattern-Verfahren (OPP) bezeichnet. Ein derartiges Modulationsverfahren offenbart zum Beispiel die DE 10 2018 205 514 A1.

Die Schrift WO 2022/044299 A1 beschreibt eine Motorsteuervorrichtung welche die Modulationsmodi zwischen einer asynchronen PWM-Steuerung und einer synchronen PWM-Steuerung umschaltet. Unmittelbar vor dem Umschalten wird ein Kompensationswert auf der Grundlage einer Zustandsgröße berechnet, die die Spannung unmittelbar nach dem Umschalten durch den Kompensationswert kompensiert.

So zeigt die JPH 10-337036 A einen Pulsweitengenerator, der zwischen einer asynchronem Pulsweitenmodulation und einer synchronen Pulsweitenmodulation durch Vergleichen der modulierten Welle umschalten kann.

Aus der DE 10 2006 052 042 A1 ist eine Steuer- und/oder Regeleinrichtung zum Betreiben einer Asynchronmaschine bekannt. Hierzu erzeugen ein Ständerflussregler und ein Pulsmustergenerator auf Mittelwert-basierte Pulssignale, wobei der Pulsmustergenerator abhängig von einer Stellgröße vom Ständerflussregler die Pulssignale anhand eines Dead-Beat-Regelverhaltens erzeugt.

Die Schrift CA 2 762 473 A1 offenbart einen Umrichter für ein elektrisches System, der so gesteuert wird, dass die Schaltsequenzen für den Umrichter, ausgehend von einem ersten Zustand in einen zweiten Zustand so modifiziert werden, dass die Schaltsequenz einen etwaigen Flussfehler korrigiert.

Auch in der Veröffentlichung "Optimized Pulse Patterns for Salient Permanent Magnet Synchronous Machines Considering Nonlinear Magnetic Effects" von M. Hepp, M. Saur, W. Wondrak and M.-M. Bakran aus 2023 sowie in der Veröffentlichung "Applying DBFC with Integrated Optimized Pulsed Pattern to Maximize Voltage Utilization with Low Distortion in Automotive Traction Drives", 2023 25TH EUROPEAN CONFERENCE ON POWER ELECTRONICS AND APPLICATIONS (EPE'23 ECCE EUROPE) von M. Saur, M. Hepp, M Silva und W. Wondrak oder auch in der Veröffentlichung "Deadbeat Flux Vector Control as a One Single Control Law Operating in the Linear, Overmodulation, and Six-Step Regions With Time-Optimal Torque Control" von H. EL KHATIB, D. GERLING and M. SAUR aus 2022 sind verschiedene Grundlagen zur Pulsweitenmodulation dargelegt.

Das Betreiben der Schaltelemente des Wechselrichters im Rahmen einer Regelung basierend auf optimierten Pulsmustern gemäß dem OOP-Strichverfahren ist aufwendig. Darüber hinaus können die bekannten Regelungsverfahren, die bei einer SVP-Modulation zum Einsatz kommen können, nicht mit einer geeignet hohen Dynamik eingesetzt werden. Als besonders nachteilig erweist es sich, wenn die Regelung einen Proportional-Integral-(PI)-basierten Stromregler nutzt, weil bei der Nutzung eines derartigen Reglers in der Realität versucht wird, kleine Abweichungen bereits auszugleichen, und eine Integration bei einer OPP-Modulation nicht zufriedenstellend realisiert werden kann. Darüber hinaus kann festgestellt werden, dass PI-Stromregler sich in der Regel nur für einen linearen Modulationsbereich eigenen, bei dem ein Modulationsgrad m kleiner als 1,15 ist.

Besser eignet sich eine Regelung des magnetischen Flusses der Ständerwicklung unter Nutzung eines Dead-Beat-Flux-Control-(DBFC)-Modulationsverfahrens. Dieses Verfahren basiert darauf, den magnetischen Fluss, vorzugsweise direkt, zu regeln. Dabei wird ausgenutzt, dass der magnetische Fluss und das jeweilige Pulsmuster von Schaltsignalen in einem direkten Zusammenhang stehen, zumal durch eine Integration des Pulsmusters eine zugehörige Fluss-Trajektorie des magnetischen Flusses bestimmt werden kann, auf deren Basis dann eine Regelung realisiert werden kann. Das DBFC - Modulationsverfahren lässt sich weiterhin auch anwenden, wenn ein Übermodulationsbereich genutzt werden soll und eignet sich ferner auch dazu, eine Blocktaktung abzubilden, bei der ein Modulationsgrad m größer oder gleich 1,27 ist. Ein DBFC-Verfahren ist zum Beispiel aus der DE 10 2006 052 042 A1 bekannt.

Gemäß dem DBFC-Modulationsverfahren werden Sollspannungen $v^*_{\alpha\beta}$ aus einer Differenz eines magnetischen Soll-Flusses $\psi^*_{\alpha\beta}$ und einem geschätzten magnetischen Fluss $\hat{\psi}_{\alpha\beta}$ berechnet. Der geschätzte magnetische Fluss wird mittels eines geeigneten Beobachters beziehungsweise einer Beobachtungseinheit bestimmt. Die auf diese Weise ermittelten Sollspannungen können dann einem bekannten Space-Vektor-Modulator zugeführt werden. Die folgende Formel stellt die Zusammenhänge dar, wobei die Größen in dieser Formel Clarke-transformierte sind:

$$v^*_{\alpha\beta}(k) = \frac{\psi^*_{\alpha\beta}(k) - \widehat{\psi}_{\alpha\beta}(k)}{T_s} + R_S i_{\alpha\beta}(k)$$

In der Praxis ist es üblich, für einen kleinen Modulationsgrad, insbesondere für einen Modulationsgrad m < 1,21 das DBFC-Modulationsverfahren zu nutzen, wobei bei größeren Modulationsgraden, insbesondere bei einem Modulationsgrad m >1,27, ein OPP-Modulationsverfahren eingesetzt wird.

Ändert sich während des Betriebs der Modulationsgrad m kann es somit zum Wechsel des Modulationsverfahrens kommen. Dabei können Störungen auftreten, insbesondere unerwünschte Schwingungszustände und/oder dergleichen.

Der Erfindung liegt die Aufgabe zugrunde, Störungen, die beim Wechseln der vorgenannten Modulationsverfahren auftreten können, zu reduzieren.

Als Lösung werden mit der Erfindung ein Verfahren, eine Steuereinheit und ein Kraftfahrzeug gemäß den unabhängigen Ansprüchen vorgeschlagen.

Vorteilhafte Weiterbildungen ergeben sich durch Merkmale der abhängigen Ansprüche.

Für ein gattungsgemäßes Verfahren gemäß dem Oberbegriff des Anspruchs 1 wird mit der Erfindung insbesondere vorgeschlagen, dass ein magnetischer Fluss der Ständerwicklung jeweils abhängig von den für die erste Pulsweitenmodulation ermittelten Schaltsignalen und abhängig von den für die zweite Pulsweitenmodulation ermittelten Schaltsignalen bestimmt wird, und das Wechseln zwischen den für die erste Pulsweitmodulation ermittelten Schaltsignalen und den für die zweite Pulsweitenmodulation ermittelten Schaltsignalen erfolgt, wenn Amplituden und Phasen der jeweils bestimmten magnetischen Flüsse gleich sind.

In Bezug auf eine gattungsgemäße Steuereinheit gemäß dem Oberbegriff des Anspruchs 9 wird mit der Erfindung insbesondere vorgeschlagen, dass die Steuereinheit ausgebildet ist, einen magnetischen Fluss der Ständerwicklung jeweils abhängig von den für die erste Pulsweitenmodulation ermittelten Schaltsignalen und abhängig von den für die zweite Pulsweitmodulation ermittelten Schaltsignale zu bestimmen und das Wechseln zwischen den für die erste Pulsweitenmodulation ermittelten Schaltsignalen und den für die zweite Pulsweitenmodulation ermittelten Schaltsignale durchzuführen, wenn Amplituden und Phasen der jeweils bestimmten magnetischen Flüsse gleich sind

In Bezug auf ein gattungsgemäßes Kraftfahrzeug gemäß dem Oberbegriff des Anspruchs 10 wird mit der Erfindung insbesondere vorgeschlagen, dass die Steuereinheit gemäß der Erfindung ausgebildet ist.

Die Erfindung basiert unter anderem auf dem Gedanken, dass der Wechsel zwischen den vorgenannten Modulationsverfahren, und zwar der ersten Pulsweitenmodulation und der zweiten Pulsweitenmodulation, nicht willkürlich irgendwann erfolgt, sondern genau zu einem geeigneten Zeitpunkt, bei dem basierend auf beiden Pulsweitenmodulationsverfahren bezüglich des magnetischen Flusses des Ständers die gleiche Phase und die gleiche Amplitude erreicht werden können und damit diese Werte beim Wechseln im Wesentlichen identisch sind. Dadurch können die beim Stand der Technik auftretenden Störungen aufgrund des Wechselns zwischen den beiden Pulsweitenmodulationsverfahren reduziert, wenn nicht sogar vollständig vermieden werden. So ist ein nahezu störungsfreies beziehungsweise reibungsloses Wechseln zwischen einer Flusstrajektorie basierend auf dem DBFC-Modulationsverfahren und einer Flusstrajektorie basierend auf dem OPP-Modulationsverfahren möglich, wobei beispielsweise ein Überschwingen oder ein Unterschwingen, insbesondere in Bezug auf einen elektrischen Strom der Ständerwicklung, weitgehend vermieden werden kann. Dabei erweist es sich als besonders vorteilhaft, wenn ein Arbeitspunkt beziehungsweise ein Betriebspunkt für beide Pulsweitenmodulationsverfahren beim Wechseln der gleiche ist.

Das Grundprinzip der Pulsweitenmodulation ist dem Fachmann bekannt, ebenso wie das Prinzip der Raumzeiger-Pulsweitenmodulation (Englisch: Space-Vektor-Puls-Wide-Modulation, PWM). Von detaillierten Erläuterungen wird vorliegend abgesehen, da diese Verfahren dem Fachmann bekannt sind.

Der magnetische Fluss kann mittels einer Beobachtungseinheit bestimmt werden, die einen Beobachter nutzt, wie er beispielsweise von Secrest et al. durch den Fachartikel "Deriving State Block Diagrams that Correctly Model Hand-Code Implementation - Correcting the Enhanced Luenberger Style Motion Observer as an Example" in IEEE Trans.on Int. Applicat., 2019 offenbart ist.

Die elektrische Maschine ist vorzugsweise eine Synchronmaschine, die eine dreiphasige Ständerwicklung aufweist. In alternativen Ausgestaltungen kann die Anzahl der Phasen natürlich auch abweichen, und es kann insbesondere eine mehrphasige Ständerwicklung vorgesehen sein, die mehr als drei Phasen aufweist. Der Wechselrichter ist entsprechend der Anzahl der Phasen der Ständerwicklung angepasst ausgebildet und stellt für jede der Phasen der Ständerwicklung einen entsprechenden Anschluss bereit, an dem die jeweilige Phasenspannung zur Verfügung gestellt wird.

Der Wechselrichter ist vorliegend ein Zwei-Pegel-Wechselrichter, der an einem jeweiligen Anschluss zwei elektrische Potenziale bereitzustellen vermag, zwischen denen gemäß dem jeweiligen Schaltsignal der jeweiligen Pulsweitenmodulation gewechselt wird. Die beiden elektrischen Potenziale entsprechen vorliegend im Wesentlichen den elektrischen Potenzialen, die mittels des Gleichspannungszwischenkreises, an den der Wechselrichter angeschlossen ist, zur Verfügung gestellt sind.

Die Schaltelemente sind vorliegend elektronische Schaltelemente und können durch Transistoren gebildet sein, die im Schaltbetrieb betrieben werden. Der Schaltbetrieb eines Transistors bedeutet, dass in einem eingeschalteten Zustand zwischen den die Schaltstrecke bildenden Anschlüssen ein sehr geringer elektrischer Widerstand bereitgestellt wird, sodass ein hoher Stromfluss bei sehr kleiner Restspannung möglich ist. Im ausgeschalteten Zustand ist die Schaltstrecke des Transistors hochohmig, das heißt, sie stellt einen hohen elektrischen Widerstand bereit, so dass auch bei hoher an der Schaltstrecke anliegender Spannung im Wesentlichen kein oder nur ein sehr geringer insbesondere vernachlässigbarer Stromfluss vorliegt.

Die Erfindung sieht vor, dass vorzugsweise mittels der Beobachtungseinheit beziehungsweise Beobachtereinheit der Steuereinheit der jeweils realisierbare aktuelle magnetische Fluss der Ständerwicklung bestimmt wird. Ist ein Wechsel zwischen der ersten und der zweiten Pulsweitenmodulation an einem vorzugsweise bestimmten Betriebspunkt beabsichtigt, werden mittels der Beobachtereinheit die Amplituden und die Phasen derjenigen magnetischen Flüsse bestimmt, die zu dem Zeitpunkt mittels der ersten und der zweiten Pulsweitenmodulation erreicht werden können. Sobald die Amplituden und die Phasen als im Wesentlichen gleich bestimmt worden sind, kann der Wechsel zwischen der ersten und der zweiten Pulsweitenmodulation durchgeführt werden. Da jeweils die Phase und die Amplitude der ersten und der zweiten Pulsweitenmodulation zu diesem Zeitpunkt zu einem im Wesentlichen gleichen Wert führt, kann der Wechsel nahezu störungsfrei durchgeführt werden. Insbesondere können Oberschwingungen und Unterschwingungen nahezu vollständig vermieden werden. Dies verbessert den zuverlässigen Betrieb der elektrischen Maschine in Verbindung mit dem Wechselrichter. Insbesondere können unerwünschte Überlastvorgänge weitgehend vermieden werden.

Die Schaltsignale sind an die funktionalen Eigenschaften der Schaltelemente angepasst ausgebildet. Die Steuereinheit stellt die Schaltsignale in geeigneter Weise bereit, sodass die Schaltelemente die gewünschte Schaltfunktionalität realisieren können. Die Schaltsignale sind vorzugsweise digitale Signale, die insbesondere zwei Signalwerte einnehmen können, die dazu führen, dass das Schaltelement den eingeschalteten Schaltzustand und den einen ausgeschalteten Schaltzustand einnehmen kann.

Vorzugsweise wird zum Wechseln gewartet, bis die Amplituden und die Phasen der jeweils bestimmten magnetischen Flüsse gleich sind. Zu diesem Zweck werden die mittels der ersten und der zweiten Pulsweitenmodulation realisierbaren magnetischen Flüsse wiederholt erneut ermittelt, um den Zeitpunkt der im Wesentlichen Gleichheit möglichst genau und zuverlässig bestimmen zu können. Sobald dieser Zeitpunkt mittels der Steuereinheit bestimmt ist, wird der Wechsel vorzugsweise unverzüglich zwischen der ersten und der zweiten Pulsweitenmodulation durchgeführt.

Es wird ferner vorgeschlagen, dass zum Wechseln gewartet wird, bis die Phasen der jeweils bestimmten magnetischen Flüsse gleich sind und anschließend durch variieren der für die zweite Pulsweitenmodulation ermittelten Schaltsignale die Amplitude des zugehörigen magnetischen Flusses verändert wird, bis die Amplituden der magnetischen Flüsse gleich sind. Dadurch kann das Umschalten teilweise gesteuert werden. Es braucht also nicht mehr gewartet zu werden, bis sowohl die Phasen als auch die Amplituden der jeweiligen zugeordneten realisierbaren magnetischen Flüsse gleich sind, sondern es kann bereits bei einer Phasengleichheit durch entsprechendes Steuern der zweiten Pulsweitenmodulation ein Angleichen der Amplituden der realisierbaren magnetischen Flüsse erreicht werden. Dadurch kann Wartezeit verkürzt werden. Dabei wird ausgenutzt, dass sich das DBFC-Modulationsverfahren in hochflexibler Weise nutzen lässt, um den magnetischen Fluss einstellen zu können.

Darüber hinaus wird vorgeschlagen, dass zum Wechseln gewartet wird, bis die Amplituden der jeweils bestimmten magnetischen Flüsse gleich sind und anschließend durch Variieren der für die zweite Pulsweitenmodulation ermittelten Schaltsignale die Phase des zugehörigen magnetischen Flusses verändert wird, bis die Phasen der magnetischen Flüsse gleich sind. Bei dieser Ausgestaltung wird im Unterschied zur vorhergehenden Ausgestaltung darauf gewartet, bis die erreichbaren Amplituden mittels der erste und der zweiten Pulsweitenmodulation im Wesentlichen gleich sind, wobei dann durch das Variieren der zweiten Pulsweitenmodulation eine entsprechende Phasenanpassung durchgeführt wird, um die Phasengleichheit möglichst zügig erreichen zu können. Auch hier kann die Wartezeit verkürzt werden.

Weiterhin wird vorgeschlagen, dass zum Wechseln die für die zweite Pulsweitenmodulation ermittelten Schaltsignale variiert werden, bis die Amplituden und die Phasen der jeweils bestimmten magnetischen Flüsse gleich sind. Hierdurch ist es möglich, den Wechsel zwischen den beiden Pulsweitenmodulationen gesteuert herbeizuführen. Auch hierbei erweist es sich als vorteilhaft, dass die zweite Pulsweitenmodulation, die das DFBC-Modulationsverfahren nutzt, in hochflexibler Weise genutzt werden kann, um die Angleichung der Amplituden und der Phasen herbeizuführen. Dadurch kann die erfindungsgemäße Verfahrensführung weiter verbessert werden.

Es wird ferner vorgeschlagen, dass zum Wechseln ein elektrischer Winkel der Ständerwicklung berücksichtigt wird. Dadurch kann die Verfahrensführung weiter verbessert werden, weil eine Drehlage in Bezug auf das Magnetfeld des Ständers ergänzend berücksichtigt werden kann.

Weiterhin wird vorgeschlagen, dass zum Wechseln ein Lastwinkel der elektrischen Maschine berücksichtigt wird. Der Lastwinkel kann bei einer Synchronmaschine der Polradwinkel sein, der sich abhängig von der Belastung der elektrischen Maschine einstellt. Auch dies ermöglicht es, die erfindungsgemäße Verfahrensführung weiter zu verbessern und Störungen zu reduzieren.

Darüber hinaus wird vorgeschlagen, dass zumindest für die für die zweite Pulsweitenmodulation ermittelten Schaltsignale der magnetische Fluss mittels einer Flussbeobachtereinheit bestimmt wird. Dadurch ist es möglich, den magnetischen Fluss zuverlässig zu bestimmen beziehungsweise zu schätzen.

Der magnetische Fluss kann in Bezug auf die erste Pulsweitenmodulation dem Grunde nach natürlich auch durch Erfassen der jeweiligen Phasenströme der Ständerwicklung bestimmt werden.

Die für das erfindungsgemäße Verfahren angegebenen Vorteile und Wirkungen gelten natürlich gleichermaßen auch für die erfindungsgemäße Steuereinheit und das mit der erfindungsgemäßen Steuereinheit ausgerüstete Kraftfahrzeug und umgekehrt. Insofern können Verfahrensmerkmale auch als Vorrichtungsmerkmale und umgekehrt formuliert sein.

Weitere Vorteile, Merkmale und Einzelheiten der Erfindung ergeben sich aus der nachfolgenden Beschreibung bevorzugter Ausführungsbeispiele sowie anhand der Zeichnung(en). Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:

Fig. 1      eine schematische Diagrammdarstellung einer normierten Phasenspannung abhängig von einem Schaltwinkel für eine synchrone Modulation,

Fig. 2      eine schematische Diagrammdarstellung von drei normierten Phasenspannungen zum Beaufschlagen einer dreiphasigen Ständerwicklung einer Synchronmaschine,

Fig. 3      eine schematische Diagrammdarstellung einer Flusstrajektorie in einer $\alpha/\beta$-Ebene, die durch Integration der Phasenspannung gemäß Fig. 2 erhalten ist,

Fig. 4      eine schematische Diagrammdarstellung einer Flusstrajektorie gemäß einer DBFC-Modulation für einen Modulationsgrad von m = 1,21,

Fig. 5      eine schematische Diagrammdarstellung einer Flusstrajektorie gemäß einer DBFC-Modulation für einen Modulationsgrad von m = 1,22,

Fig. 6      eine schematische Diagrammdarstellung einer Flusstrajektorie gemäß einer DBFC-Modulation für einen Modulationsgrad von m = 1,24,

Fig. 7      eine schematische Diagrammdarstellung einer Flusstrajektorie gemäß einer DBFC-Modulation für einen Modulationsgrad von m = 1,26,

Fig. 8      eine schematische Diagrammdarstellung einer Flusstrajektorie gemäß einer DBFC-Modulation für einen Modulationsgrad von m = 1,27,

Fig. 9      eine schematische Diagrammdarstellung einer Amplitudendifferenz eines magnetischen Flusses abhängig von einem elektrischen Winkel,

Fig. 10      eine schematische Diagrammdarstellung einer Phasendifferenz eines magnetischen Flusses abhängig von einem elektrischen Winkel,

Fig. 11      eine schematische Diagrammdarstellung eines Regelzyklusses,

Fig. 12      eine schematische Diagrammdarstellung von drei Phasenströmen der Ständerwicklung abhängig von der Zeit bei einem Wechsel zwischen zwei PWMs zu einem beliebigen Zeitpunkt, und

Fig. 13 eine schematische Diagrammdarstellung wie Fig. 12, wobei der Wechsel erfolgt, wenn die Amplituden und die Phasen der mit den beiden PWMs realisierbaren magnetischen Flüsse im Wesentlichen gleich sind.

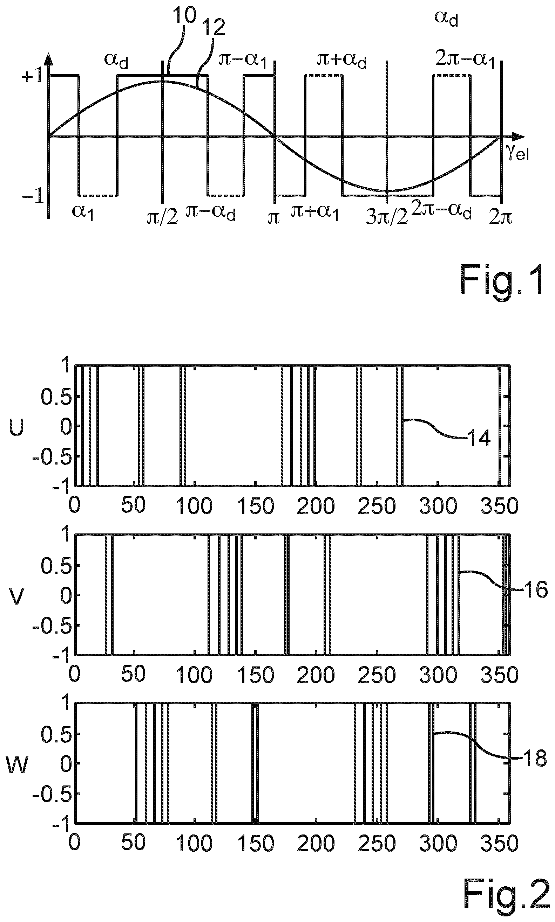

Fig. 1 zeigt eine schematische Diagrammdarstellung einer normierten Phasenspannung abhängig von einem Schaltwinkel für eine synchrone Modulation. Mit einem Graphen ist eine vom Wechselrichter abgegebene normierte Spannung 10 dargestellt, mit der eine Phase der Ständerwicklung einer Synchronmaschine beaufschlagt wird. Mit einem Graphen ist eine zugehörige Phasenspannung 12 dargestellt. Bei einer synchronen Modulation werden Schaltwinkel $\alpha$ so bestimmt, dass bestimmte Kriterium erfüllt werden können, zum Beispiel eine geringe Stromverzerrung in Bezug auf die Phasenströme der Ständerwicklung, eine geringe Verzerrung der Phasenspannungen und/oder dergleichen. Beispielsweise kann auch vorgesehen sein, dass eine Reduzierung eines Rippels einer Zwischenkreisgleichspannung eines Gleichspannungszwischenkreises, an dem der Wechselrichter angeschlossen ist, möglichst klein sein soll. Derartige Pulsmuster, wie sie mit dem Graphen der abgegebenen normierten Spannung 10 dargestellt sind, werden auch als optimierte Pulsmuster (Englisch: Optimized Pulse Pattern, OPP) bezeichnet.

Der Graph der Phasenspannung 12 bezeichnet auch eine Grundschwingung, die einem Umlauf eines Läufers der Synchronmaschine entspricht. Die Grundschwingung kann mittels einer Fouriertransformation, insbesondere mittels einer FFT, bestimmt werden. Bei einer Fouriertransformation ist die Grundschwingung in der Regel die kleinste Frequenz, bei der im Spektrum ein signifikanter Amplitudenwert zugeordnet werden kann.

Fig. 2 zeigt ein in einer schematischen Diagrammdarstellung drei Einzeldiagramme zu normierten Phasenspannungen zum Beaufschlagen einer dreiphasigen Ständerwicklung der Synchronmaschine. Die Phasenspannungen sind mit den Buchstaben u, v, w bezeichnet. Bei den Phasenspannungen handelt es sich um normierte Spannungswerte. Die Phasenspannungen sind der Ordinate der jeweiligen Einzeldiagramme zugeordnet. Die jeweiligen Abszissen sind einem jeweiligen Winkel zugeordnet. Zu erkennen ist, dass die Phasenspannungen u, v, w jeweils um einen Winkel von 120° zueinander verschoben sind. Es handelt sich hierbei also um ein dreiphasiges Pulsmuster für einen Wechselrichter, der als Zwei-Pegel-Wechselrichter realisiert ist.

In den Einzeldiagrammen der Fig. 2 sind die Phasenspannungen u, v, w dargestellt. Die Graphen zeigen jeweilige Schaltwinkel 14, 16, 18, zu denen zwischen den beiden bereitstellbaren elektrischen Potenzialen durch den Wechselrichter gewechselt wird.

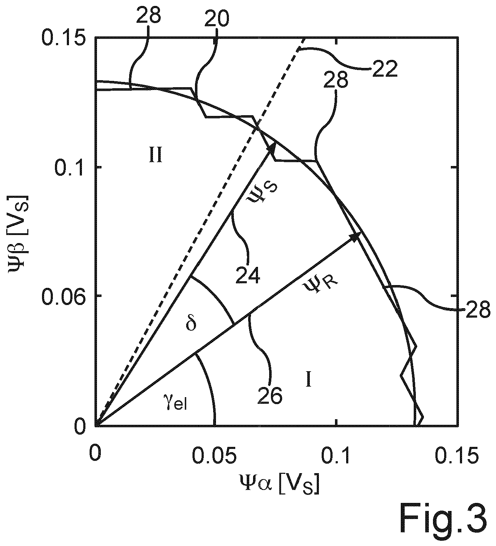

Fig. 3 zeigt eine schematische Diagrammdarstellung einer Flusstrajektorie in einer $\alpha/\beta$-Ebene, die durch Integration der Phasenspannungen u, v, w gemäß Fig. 2 erhalten wird. Die Flusstrajektorie 20 ist mittels eines Graphen in Fig. 3 dargestellt. Bei der Diagrammdarstellung gemäß Fig. 3 handelt es sich um eine Clarke-Transformierte. In der Diagrammdarstellung gemäß Fig. 3 ist ein Sektor I vollständig und ein Sektor II teilweise dargestellt. Die Sektoren I und II sind durch eine Linie 22 voneinander getrennt. Ein Graph $\psi_R$ ist einem magnetischen Rotorfluss eines Läufers der Synchronmaschine zugeordnet. Ein Graph zeigt einen magnetischen Ständerfluss 24 der Synchronmaschine, der mit $\psi_S$ bezeichnet ist. Ein Winkel $\gamma_{el}$ bezeichnet den elektrischen Winkel und ein Winkel $\delta$ bezeichnet den Lastwinkel der Synchronmaschine. Punkte 28 bezeichnen je einen Nullvektor.

Die Darstellung gemäß Fig. 3 wird durch Integrieren der Soll-Spannungen gemäß Fig. 2 für einen Modulationsgrad m von 1,15 erhalten.

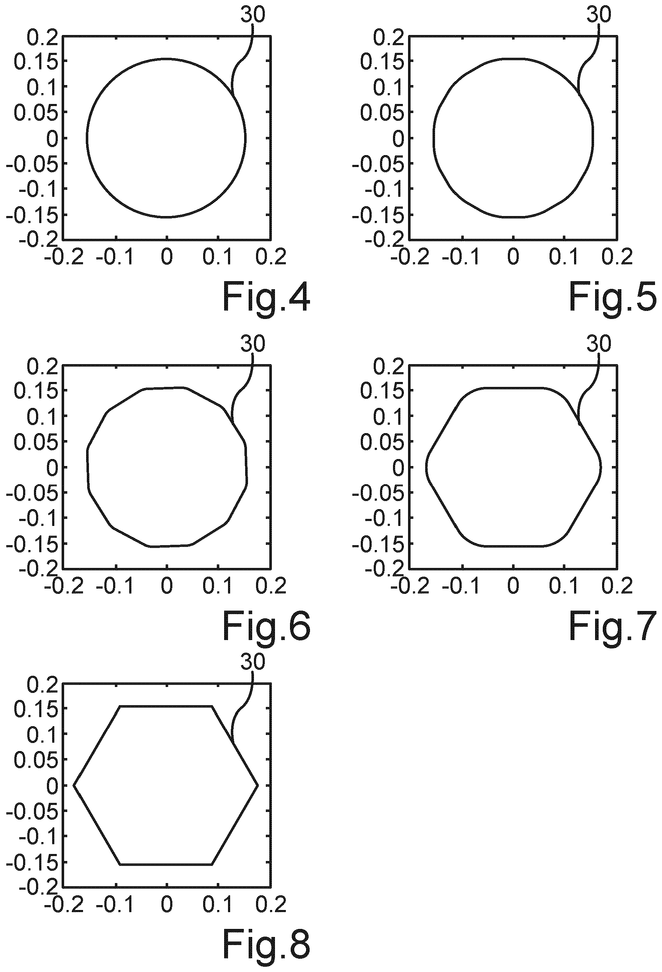

Die Fig. 4 bis 8 zeigen jeweilige schematische Diagrammdarstellungen einer Flusstrajektorie, die in den Figuren mit dem Bezugszeichen 30 bezeichnet ist. Die Flusstrajektorie 30 ergibt sich durch Anwendung der DBFC-Modulation wie oben erläutert. Bis zu einem Modulationsgrad von m = 1,21 ist die Flusstrajektorie 30 nahezu im Wesentlichen kreisförmig. Die Fig. 5 zeigt die Situation für einen Modulationsgrad von m = 1,22, die Fig. 6 zeigt die Situation für einen Modulationsgrad von m = 1,24, die Fig. 7 zeigt die Situation für einen Modulationsgrad von m = 1,26 und die Fig. 8 zeigt die Situation für einen Modulationsgrad von m = 1,27. Aus den Figuren 4 bis 8 ist ersichtlich, dass ab dem Modulationsgrad von m = 1,21 mit zunehmendem Modulationsgrad sich die Flusstrajektorie 30 von der im Wesentlichen Kreisform immer weiter zu einem Hexagon annähert, wie es gemäß Fig. 8 dargestellt ist. Für einen Modulationsgrad von m = 1,27 und größer liegt eine Blocktaktung vor.

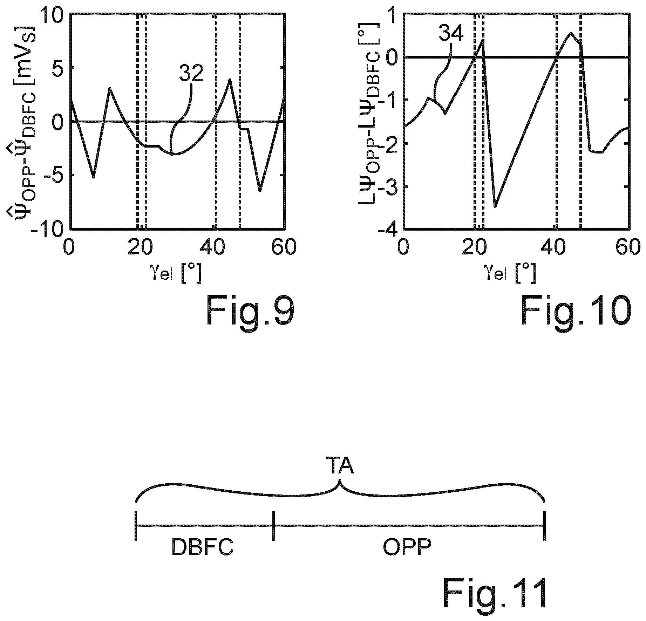

Für einen möglichst störungsfreien Wechsel von zum Beispiel der gemäß dem DBFC-Modulationsverfahren realisierbaren Flusstrajektorie auf die mit dem OPP-Modulationsverfahren realisierbare Flusstrajektorie oder umgekehrt kann dann erreicht werden, wenn der jeweils realisierbare Fluss in Bezug auf die jeweilige Amplitude und jeweilige Phase im Wesentlichen, vorzugsweise exakt, gleich ist. Zu diesem Zweck realisiert die Steuereinheit beide Modulationsverfahren als erstes und zweites Pulsweitenmodulationsverfahren parallel. Durch entsprechendes Auswerten kann die Steuereinheit feststellen, wann die Amplituden- und Phasengleichheit etwa erreicht ist. Mit den schematischen Diagrammen der Figuren 9 und 10 wird dies weiter verdeutlicht.

In Fig. 9 ist die Amplitudendifferenz 32 mit einem Graphen dargestellt. In Fig. 10 ist die Phasendifferenz 34 mit einem Graphen dargestellt. So zeigt Fig. 9 ein schematisches Diagramm einer Amplitudendifferenz zwischen der ersten und der zweiten Pulsweitenmodulation. Wie aus Fig. 9 ersichtlich ist, ergeben sich im vorliegenden Beispiel sechs Punkte, an denen die Amplitudendifferenz null ist.

Entsprechend zeigt Fig. 10 eine schematische Diagrammdarstellung, bei der eine Phasendifferenz zwischen den mittels der beiden Pulsweitenmodulationen realisierbaren magnetischen Flüsse dargestellt ist. Aus Fig. 10 ist ersichtlich, dass es im vorliegenden Beispiel vier Stellen gibt, an denen die Phasendifferenz null beträgt.

Zunächst wird in der vorliegenden Ausgestaltung geprüft, an welchen Stellen die Amplitudendifferenz der magnetischen Flüsse null ist. Daraufhin wird bestimmt, bei welchen elektrischen Winkeln die Phasendifferenz zwischen den beiden Flusstrajektorien null ist. An den hierdurch ermittelten Punkten kann sodann zwischen den beiden Pulsweitenmodulationen gewechselt werden beziehungsweise es kann der Modulator umgeschaltet werden.

Wie aus den Figuren 9 und 10 ersichtlich ist, sind die Amplituden noch nicht gleich. Die vorliegende Differenz kann jetzt aber durch entsprechendes Variieren der zweiten Pulsweitenmodulation, die die DFBC- Modulationen nutzt, angeglichen werden. Dadurch kann dann der Schaltzustand beziehungsweise Wechselzustand erreicht werden. Dies zeigt Fig. 11 in einer schematischen Diagrammdarstellung einer Regelzykluszeit TA. Wie aus Fig. 11 ersichtlich ist, kann innerhalb einer Regelzykluszeit TA nunmehr sowohl eine DBFC-Modulation als auch eine OPP- Modulation genutzt werden. Die Regelzykluszeit TA kann zum Beispiel etwa 100 µs betragen. Dies entspricht einer Taktrate von 10 kHz.

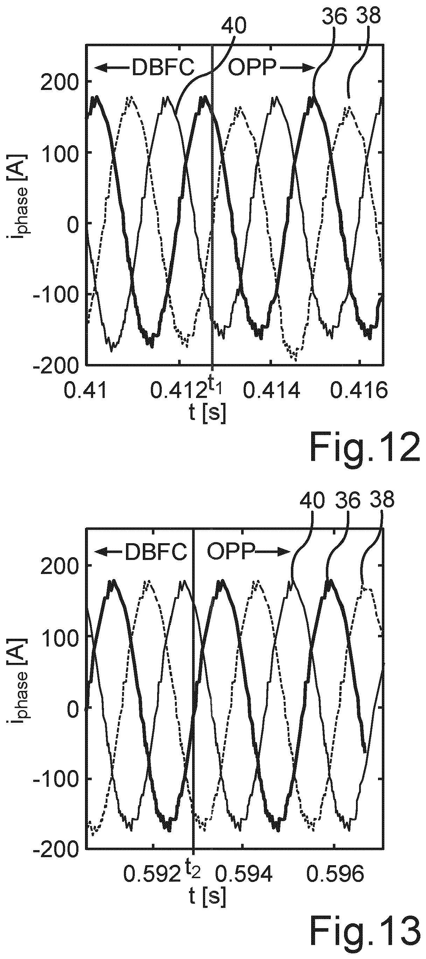

Die Figuren 12 und 13 zeigen jeweilige schematische Diagrammdarstellungen von den Dreiphasenströmen der Ständerwicklung in einem Zeitintervall, in dem ein Wechsel zwischen den beiden Pulsweitenmodulationen durchgeführt wird. In den Figuren 12 und 13 sind die Phasenströme 36, 38, 40 mittels jeweiliger Graphen dargestellt.

Fig. 12 zeigt eine schematische Diagrammdarstellung der drei Phasenströme 36, 38, 40 der Ständerwicklung abhängig von der Zeit bei einem Wechsel zwischen den beiden Pulsweitenmodulationen zu einem bestimmten Zeitpunkt, der ein beliebiger Zeitpunkt sein kann, wobei der Wechsel ohne Berücksichtigung der Amplitudendifferenz 32 und der Phasendifferenz 34 zwischen den Flusstrajektorien 30 erfolgt, die mit den beiden Pulsweitenmodulationsverfahren realisiert werden können.

Wie aus Fig. 12 ersichtlich ist, findet der Wechsel zu einem Zeitpunkt $t_1$ statt. Aus Fig. 12 kann erkannt werden, dass der Phasenstrom 38 eine Amplitudenschwankung durchläuft. Es tritt hier also eine Störung in Bezug auf die Phasenströme auf, die durch den Wechsel zum Zeitpunkt $t_1$ realisiert ist.

Fig. 13 zeigt nun in einem entsprechenden Diagramm wie Fig. 12 die Situation, bei der der Wechsel zu einem Zeitpunkt $t_2$ stattfindet. Der Zeitpunkt $t_2$ ist so gewählt, dass die Flusstrajektorien 30 hinsichtlich der Amplitude und der Phase im Wesentlichen gleich sind. Dies führt dazu, dass, wie aus Fig. 13 ersichtlich ist, der Wechsel nahezu keine Störungen verursacht. Die Problematik, die sich beim Wechsel zum Zeitpunkt $t_1$ gemäß Fig. 12 ergibt, liegt also bei der erfindungsgemäßen Realisierung des Zeitpunkts des Wechselns bei Fig. 13 nicht vor. Daraus ist ersichtlich, dass der Wechsel der Pulsweitenmodulationsverfahren gemäß der Erfindung im Wesentlichen störungsfrei realisiert werden kann.

Die Ausführungsbeispiele dienen ausschließlich der Erläuterung der Erfindung und sollen diese nicht beschränken.

Bezugszeichenliste

| | |
|---|---|
| 10 | abgegebene normierte Spannung |
| 12 | Grundschwingung der Phasenspannung |
| 14 | Schaltwinkel |
| 16 | Schaltwinkel |
| 18 | Schaltwinkel |
| 20 | Flusstrajektorie |
| 22 | Linie |
| 24 | magnetischer Ständerfluss $\psi_S$ |
| 26 | magnetischer Rotorfluss $\psi_R$ |
| 28 | Nullvektor |
| 30 | Flusstrajektorie |
| 32 | Amplitudendifferenz |
| 34 | Phasendifferenz |
| 36 | Phasenstrom |
| 38 | Phasenstrom |
| 40 | Phasenstrom |
| u | Phasenspannung |
| v | Phasenspannung |
| w | Phasenspannung |
| δ | Lastwinkel |
| $\gamma_{el}$ | elektrischen Winkel |

**Patentansprüche**

1.  Verfahren zum Betreiben von Schaltelementen eines Wechselrichters, an den eine mehrphasige Ständerwicklung einer elektrischen Maschine angeschlossen ist, wobei der Wechselrichter für jede der Phasen der Ständerwicklung wenigstens eine Reihenschaltung aus den Schaltelementen aufweist, um die Ständerwicklung mit einem am Wechselrichter angeschlossenen Gleichspannungszwischenkreis zu koppeln, indem die Schaltelemente der Reihenschaltungen mit von jeweiligen Phasenspannungen (u, v, w) der jeweiligen Phasen abhängigen Schaltsignalen für die jeweiligen Schaltelemente beaufschlagt werden, wobei die Schaltsignale basierend auf einem Taktsignal unter Nutzung einer Pulsweitenmodulation ermittelt werden, wobei eine Taktperiode des Taktsignals kleiner als eine Schwingungsperiode einer Grundschwingung der Phasenspannungen (12) ist, wobei die Schaltsignale bei einer ersten Pulsweitenmodulation auf Basis eines Optimized-Pulse-Pattern-Verfahrens (OPP-Verfahren) und parallel hierzu bei einer zweiten Pulsweitenmodulation auf Basis eines Dead-Beat-Flux-Control-Verfahrens (DBFC-Verfahren) ermittelt werden, wobei zum Steuern der Schaltelemente entweder die für die erste Pulsweitenmodulation ermittelten Schaltsignale oder die für die zweite Pulsweitenmodulation ermittelten Schaltsignale genutzt werden, wobei zwischen einer Nutzung der für die erste Pulsweitenmodulation ermittelten Schaltsignale und der für die zweite Pulsweitenmodulation ermittelten Schaltsignale gewechselt wird, **dadurch gekennzeichnet, dass** ein magnetischer Fluss (24) der Ständerwicklung jeweils abhängig von den für die erste Pulsweitenmodulation ermittelten Schaltsignalen und abhängig von den für die zweite Pulsweitenmodulation ermittelten Schaltsignalen bestimmt wird, und das Wechseln zwischen den für die erste Pulsweitenmodulation ermittelten Schaltsignalen und den für die zweite Pulsweitenmodulation ermittelten Schaltsignalen erfolgt, wenn Amplituden und Phasen der jeweils bestimmten magnetischen Flüsse (24) gleich sind.

2. Verfahren nach Anspruch 1,
**dadurch gekennzeichnet, dass**
zum Wechseln gewartet wird, bis die Amplituden und die Phasen der jeweils bestimmten magnetischen Flüsse (24) gleich sind.

3. Verfahren nach einem der vorhergehenden Ansprüche,
**dadurch gekennzeichnet, dass**
zum Wechseln gewartet wird, bis die Phasen der jeweils bestimmten magnetischen Flüsse (24) gleich sind und anschießend durch Variieren der für die zweite Pulsweitenmodulation ermittelten Schaltsignale die Amplitude des zugehörigen magnetischen Flusses (24) verändert wird, bis die Amplituden der magnetischen Flüsse (24) gleich sind.

4. Verfahren nach Anspruch 1 oder 2,
**dadurch gekennzeichnet, dass**
zum Wechseln gewartet wird, bis die Amplituden der jeweils bestimmten magnetischen Flüsse (24) gleich sind und anschießend durch Variieren der für die zweite Pulsweitenmodulation ermittelten Schaltsignale die Phase des zugehörigen magnetischen Flusses (24) verändert wird, bis die Phasen der magnetischen Flüsse (24) gleich sind.

5. Verfahren nach Anspruch 1 oder 2,
**dadurch gekennzeichnet, dass**
zum Wechseln die für die zweite Pulsweitenmodulation ermittelten Schaltsignale variiert werden, bis die Amplituden und die Phasen der jeweils bestimmten magnetischen Flüsse (24) gleich sind.

6. Verfahren nach einem der vorhergehenden Ansprüche,
**dadurch gekennzeichnet, dass**
zum Wechseln ein elektrischer Winkel ($\gamma_{el}$) der Ständerwicklung berücksichtigt wird.

7. Verfahren nach einem der vorhergehenden Ansprüche,
**dadurch gekennzeichnet, dass**
zum Wechseln ein Lastwinkel ($\delta$) der elektrischen Maschine berücksichtigt wird.

8. Verfahren nach einem der vorhergehenden Ansprüche,
**dadurch gekennzeichnet, dass**
zumindest für die für die zweite Pulsweitenmodulation ermittelten Schaltsignale der magnetische Fluss (24) mittels einer Flussbeobachtereinheit bestimmt wird.

9. Steuereinheit zum Betreiben von Schaltelementen eines Wechselrichters, an den eine mehrphasige Ständerwicklung einer elektrischen Maschine angeschlossen ist, wobei der Wechselrichter für jede der Phasen der Ständerwicklung wenigstens eine Reihenschaltung aus den Schaltelementen aufweist, um die Ständerwicklung mit einem am Wechselrichter angeschlossenen Gleichspannungszwischenkreis zu koppeln, wobei die Steuereinheit ausgebildet ist, die Schaltelemente der Reihenschaltungen mit von jeweiligen Phasenspannungen (u, v, w) der jeweiligen Phasen abhängigen Schaltsignalen für die jeweiligen Schaltelemente zu beaufschlagen, wobei die Steuereinheit die Schaltsignale basierend auf einem Taktsignal unter Nutzung einer Pulsweitenmodulation ermittelt, wobei eine Taktperiode des Taktsignals kleiner als eine Schwingungsperiode einer Grundschwingung der Phasenspannungen (12) ist, wobei die Steuereinheit ausgebildet ist, die Schaltsignale bei einer ersten Pulsweitenmodulation auf Basis eines Optimized-Pulse-Pattern-Verfahrens (OPP-Verfahren) und parallel hierzu bei einer zweiten Pulsweitenmodulation auf Basis eines Dead-Beat-Flux-Control-Verfahrens (DBFC-Verfahren) zu ermitteln, wobei die Steuereinheit ausgebildet ist, zum Steuern der Schaltelemente entweder die für die erste Pulsweitenmodulation ermittelten Schaltsignale oder die für die zweite Pulsweitenmodulation ermittelten Schaltsignale zu nutzen, wobei die Steuereinheit ausgebildet ist, zwischen einer Nutzung der für die erste Pulsweitenmodulation ermittelten Schaltsignale und der für die zweite Pulsweitenmodulation ermittelten Schaltsignale zu wechseln,
**dadurch gekennzeichnet, dass**
die Steuereinheit ausgebildet ist, einen magnetischen Fluss (24) der Ständerwicklung jeweils abhängig von den für die erste Pulsweitenmodulation ermittelten Schaltsignalen und abhängig von den für die zweite Pulsweitenmodulation ermittelten Schaltsignalen zu bestimmen, und das Wechseln zwischen den für die erste Pulsweitenmodulation ermittelten Schaltsignalen und den für die zweite Pulsweitenmodulation ermittelten Schaltsignalen durchzuführen, wenn Amplituden und Phasen der jeweils bestimmten magnetischen Flüsse (24) gleich sind.

10. Kraftfahrzeug mit einer elektrischen Maschine, die eine mehrphasige Ständerwicklung aufweist, einem an die Ständerwicklung angeschlossenen Wechselrichter und einer Steuereinheit zum Betreiben von Schaltelementen des Wechselrichters, **dadurch gekennzeichnet, dass** die Steuereinheit gemäß Anspruch 9 ausgebildet ist.

**Claims**

1. Method for operating switching elements of an inverter to which a multiphase stator winding of an electric machine is connected, wherein the inverter has for each of the phases of the stator winding at least one series circuit composed of the switching elements, in order to couple the stator winding to a DC intermediate circuit connected to the inverter by supplying the switching elements of the series circuits with switching signals for the respective switching elements, which switching signals depend on the respective phase voltages (u, v, w) of the respective phases, wherein the switching signals are ascertained using pulse width modulation, on the basis of a clock signal, wherein a clock period of the clock signal is smaller than an oscillation period of a fundamental oscillation of the phase voltages (12), wherein the switching signals are ascertained in a first pulse width modulation based on an optimized pulse pattern method (OPP method) and in parallel therewith in a second pulse width modulation based on a deadbeat flux control method (DBFC method), wherein in order to control the switching elements, either the switching signals ascertained for the first pulse width modulation or the switching signals ascertained for the second pulse width modulation are used, wherein the switching signals ascertained for the first pulse width modulation and the switching signals ascertained for the second pulse width modulation are used in alternation, **characterized in that** a magnetic flux (24) of the stator winding is determined depending on the switching signals ascertained for the first pulse width modulation and depending on the switching signals ascertained for the second pulse width modulation, respectively, and the alternation between the switching signals ascertained for the first pulse width modulation and the switching signals ascertained for the second pulse width modulation takes place when amplitudes and phases of the respectively determined magnetic fluxes (24) are the same.

2. Method according to claim 1, **characterized in that** the alternation takes place only once the amplitudes and the phases of the respectively determined magnetic fluxes (24) are the same.

3. Method according to either of the preceding claims, **characterized in that** the alternation takes place only once the phases of the respectively determined magnetic fluxes (24) are the same and then by varying the switching signals ascertained for the second pulse width modulation, the amplitude of the associated magnetic flux (24) is changed until the amplitudes of the magnetic fluxes (24) are the same.

4. Method according to claim 1 or 2, **characterized in that** the alternation takes place only once the amplitudes of the respectively determined magnetic fluxes (24) are the same and then by varying the switching signals ascertained for the second pulse width modulation, the phase of the associated magnetic flux (24) is changed until the phases of the magnetic fluxes (24) are the same.

5. Method according to claim 1 or 2, **characterized in that** for the alternation, the switching signals ascertained for the second pulse width modulation are varied until the amplitudes and the phases of the respectively determined magnetic fluxes (24) are the same.

6. Method according to any of the preceding claims, **characterized in that** for the alternation, an electrical angle ($\gamma_{el}$) of the stator winding is taken into account.

7. Method according to any of the preceding claims, **characterized in that** for the alternation, a load angle ($\delta$) of the electric machine is taken into account.

8. Method according to any of the preceding claims, **characterized in that** at least for the switching signals ascertained for the second pulse width modulation, the magnetic flux (24) is determined by means of a flux observer unit.

9. Control unit for operating switching elements of an inverter to which a multiphase stator winding of an electric machine is connected, wherein the inverter has for each of the phases of the stator winding at least one series circuit composed of the switching elements, in order to couple the stator winding to a DC intermediate circuit connected to the inverter, wherein the control unit is designed to supply the switching elements of the series circuits with switching signals for the respective switching elements, which switching signals depend on the respective phase voltages (u, v, w) of the respective phases, wherein the control unit ascertains the switching signals using pulse width modulation, on the basis of a clock signal, wherein a clock period of the clock signal is smaller than an oscillation period of a fundamental oscillation of the phase voltages (12), wherein the control unit is designed to ascertain the switching signals in a first pulse width modulation based on an optimized pulse pattern method (OPP method) and in parallel therewith in a second pulse width modulation based on a deadbeat flux control method (DBFC method), wherein in order to control the switching elements, the control unit is designed to use either the switching signals ascertained for the first pulse width modulation or the switching signals ascertained for the second pulse width modulation, wherein the control unit is designed to use the switching signals ascertained for the first pulse width modulation and the switching signals ascertained for the second pulse width modulation in alternation, **characterized in that** the control unit is designed to determine a magnetic flux (24) of the stator winding depending on the switching signals ascertained for the first pulse width modulation and depending on the switching signals ascertained for the second pulse width modulation, respectively, and to perform the alternation between the switching signals ascertained for the first pulse width modulation and the switching signals ascertained for the second pulse width modulation when amplitudes and phases of the respectively determined magnetic fluxes (24) are the same.

10. Motor vehicle comprising an electric machine having a multiphase stator winding, comprising an inverter connected to the stator winding, and comprising a control unit for operating switching elements of the inverter,
    **characterized in that**
    the control unit is designed according to claim 9.

## Revendications

1. Procédé permettant de faire fonctionner des éléments de commutation d'un onduleur auquel est raccordé un enroulement statorique polyphasé d'une machine électrique, dans lequel l'onduleur présente, pour chacune des phases de l'enroulement statorique, au moins un circuit série constitué des éléments de commutation, afin de coupler l'enroulement statorique à un circuit intermédiaire à tension continue raccordé à l'onduleur, en appliquant aux éléments de commutation des circuits série des signaux de commutation dépendant des tensions de phase (u, v, w) respectives des phases respectives pour les éléments de commutation respectifs, dans lequel les signaux de commutation sont déterminés sur la base d'un signal d'horloge en utilisant une modulation en largeur d'impulsion, dans lequel une période d'horloge du signal d'horloge est inférieure à une période d'oscillation d'une oscillation fondamentale des tensions de phase (12), dans lequel les signaux de commutation sont déterminés lors d'une première modulation en largeur d'impulsion sur la base d'un procédé à motif d'impulsion optimisé (procédé OPP, Optimized-Pulse-Pattern) et parallèlement à cela lors d'une seconde modulation en largeur d'impulsion sur la base d'un procédé de commande de flux à déphasage constant (procédé DBFC, Dead-Beat-Flux-Control), dans lequel, pour commander les éléments de commutation, soit les signaux de commutation déterminés pour la première modulation en largeur d'impulsion, soit les signaux de commutation déterminés pour la seconde modulation en largeur d'impulsion, sont utilisés, dans lequel une alternance est réalisée entre une utilisation des signaux de commutation déterminés pour la première modulation en largeur d'impulsion et des signaux de commutation déterminés pour la seconde modulation en largeur d'impulsion, **caractérisé en ce que** un flux magnétique (24) de l'enroulement statorique est établi respectivement en fonction des signaux de commutation déterminés pour la première modulation en largeur d'impulsion et en fonction des signaux de commutation déterminés pour la seconde modulation en largeur d'impulsion, et l'alternance entre les signaux de commutation déterminés pour la première modulation en largeur d'impulsion et les signaux de commutation déterminés pour la seconde modulation en largeur d'impulsion s'effectue lorsque les amplitudes et les phases des flux magnétiques (24) respectivement établis sont égales.

2. Procédé selon la revendication 1,
   **caractérisé en ce que**
   pour l'alternance, on attend que les amplitudes et les phases des flux magnétiques (24) respectivement établis soient égales.

3. Procédé selon l'une des revendications précédentes,
   **caractérisé en ce que**
   pour l'alternance, on attend jusqu'à ce que les phases des flux magnétiques (24) respectivement établis soient égales et ensuite, en faisant varier les signaux de commutation déterminés pour la seconde modulation en largeur d'impulsion, l'amplitude du flux magnétique (24) associé est modifiée jusqu'à ce que les amplitudes des flux magnétiques (24) soient égales.

4. Procédé selon la revendication 1 ou 2,
**caractérisé en ce que**
pour l'alternance, on attend jusqu'à ce que les amplitudes des flux magnétiques (24) respectivement établis soient égales et ensuite, en faisant varier les signaux de commutation déterminés pour la seconde modulation en largeur d'impulsion, la phase du flux magnétique (24) associé est modifiée, jusqu'à ce que les phases des flux magnétiques (24) soient égales.

5. Procédé selon la revendication 1 ou 2,
**caractérisé en ce que**
pour l'alternance, les signaux de commutation déterminés pour la seconde modulation en largeur d'impulsion sont amenés à varier jusqu'à ce que les amplitudes et les phases des flux magnétiques (24) respectivement établis soient égales.

6. Procédé selon l'une des revendications précédentes,
**caractérisé en ce que**
pour l'alternance, un angle électrique ($\gamma_{el}$) de l'enroulement statorique est pris en compte.

7. Procédé selon l'une des revendications précédentes,
**caractérisé en ce que**
pour l'alternance, un angle de charge ($\delta$) de la machine électrique est pris en compte.

8. Procédé selon l'une des revendications précédentes,
**caractérisé en ce que**
au moins pour les signaux de commutation déterminés pour la seconde modulation en largeur d'impulsion, le flux magnétique (24) est établi par le biais d'une unité d'observation de flux.

9. Unité de commande permettant de faire fonctionner des éléments de commutation d'un onduleur auquel est raccordé un enroulement statorique polyphasé d'une machine électrique, dans laquelle l'onduleur présente, pour chacune des phases de l'enroulement statorique, au moins un circuit série constitué des éléments de commutation, afin de coupler l'enroulement statorique à un circuit intermédiaire à tension continue raccordé à l'onduleur, dans laquelle l'unité de commande est conçue pour appliquer aux éléments de commutation des circuits série des signaux de commutation dépendant des tensions de phase (u, v, w) respectives des phases respectives pour les éléments de commutation respectifs, dans laquelle l'unité de commande est conçue pour déterminer les signaux de commutation sur la base d'un signal d'horloge en utilisant une modulation en largeur d'impulsion, dans laquelle une période d'horloge du signal d'horloge est inférieure à une période d'oscillation d'une oscillation fondamentale des tensions de phase (12), dans laquelle l'unité de commande est conçue pour déterminer les signaux de commutation lors d'une première modulation en largeur d'impulsion sur la base d'un procédé à motif d'impulsion optimisé (procédé OPP, Optimized-Pulse-Pattern) et parallèlement à cela lors d'une seconde modulation en largeur d'impulsion sur la base d'un procédé de commande de flux à déphasage constant (procédé DBFC, Dead-Beat-Flux-Control), dans laquelle l'unité de commande est conçue pour commander les éléments de commutation, pour utiliser soit les signaux de commutation déterminés pour la première modulation en largeur d'impulsion, soit les signaux de commutation déterminés pour la seconde modulation en largeur d'impulsion, dans laquelle l'unité de commande est conçue pour alterner entre une utilisation des signaux de commutation déterminés pour la première modulation en largeur d'impulsion et des signaux de commutation déterminés pour la seconde modulation en largeur d'impulsion,
**caractérisée en ce que**
l'unité de commande est conçue pour établir un flux magnétique (24) de l'enroulement statorique respectivement en fonction des signaux de commutation déterminés pour la première modulation en largeur d'impulsion et en fonction des signaux de commutation déterminés pour la seconde modulation en largeur d'impulsion, et pour réaliser l'alternance entre les signaux de commutation déterminés pour la première modulation en largeur d'impulsion et les signaux de commutation déterminés pour la seconde modulation en largeur d'impulsion lorsque les amplitudes et les phases des flux magnétiques (24) respectivement établis sont égales.

10. Véhicule automobile comportant une machine électrique qui présente un enroulement statorique polyphasé, un onduleur raccordé à l'enroulement statorique et une unité de commande permettant de faire fonctionner des éléments de commutation de l'onduleur,
**caractérisé en ce que**
l'unité de commande est conçue selon la revendication 9.

Fig.1

Fig.2

Fig.3

Fig.4

Fig.5

Fig.6

Fig.7

Fig.8

Fig.9

Fig.10

Fig.11

Fig.12

Fig.13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018205514 A1
- WO 2022044299 A1
- JP H10337036 A
- DE 102006052042 A1
- CA 2762473 A1

**In der Beschreibung aufgeführte Nicht-Patentliteratur**

- **VON M. HEPP** ; **M. SAUR** ; **W. WONDRAK** ; **M.-M. BAKRAN**. *Optimized Pulse Patterns for Salient Permanent Magnet Synchronous Machines Considering Nonlinear Magnetic Effects*, 2023
- **VON M. SAUR** ; **M. HEPP** ; **M SILVA** ; **W. WONDRAK**. Applying DBFC with Integrated Optimized Pulsed Pattern to Maximize Voltage Utilization with Low Distortion in Automotive Traction Drives. *2023 25TH EUROPEAN CONFERENCE ON POWER ELECTRONICS AND APPLICATIONS (EPE'23 ECCE EUROPE)*
- **VON H. EL KHATIB** ; **D. GERLING** ; **M. SAUR**. *Deadbeat Flux Vector Control as a One Single Control Law Operating in the Linear, Overmodulation, and Six-Step Regions With Time-Optimal Torque Control*, 2022
- **VON SECREST et al.** Deriving State Block Diagrams that Correctly Model Hand-Code Implementation - Correcting the Enhanced Luenberger Style Motion Observer as an Example. *IEEE Trans.on Int. Applicat.*, 2019